Europäisches Patentamt

European Patent Office

Office européen des brevets

(19)

(11) Numéro de publication: **0 244 294**

**A2**

# DEMANDE DE BREVET EUROPEEN

(12)

(21) Numéro de dépôt: 87400861.8

(22) Date de dépôt: 15.04.87

(51) Int. Cl.⁴: **A 23 L 1/04**
A 23 L 1/064, A 23 C 9/154,
A 23 L 1/212

(30) Priorité: 16.04.86 FR 8605445

(43) Date de publication de la demande:
04.11.87 Bulletin 87/45

(84) Etats contractants désignés:
AT BE CH DE ES FR GB GR IT LI LU NL SE

(71) Demandeur: SOPARIND
65, avenue de Ségur
F-75007 Paris (FR)

(72) Inventeur: Bonin, Hervé
53, rue de la Madeleine
F - 28230 Epernon (FR)

(74) Mandataire: Derambure, Christian
BUGNION ASSOCIES 116, Boulevard Haussmann
F-75008 Paris (FR)

(54) Procédé de fabrication d'un produit alimentaire et produit alimentaire obtenu par le procédé.

(57) Procédé pour conférer à un produit alimentaire une texture spécifique intermédiaire entre celle d'un gel et celle d'un liquide, le produit alimentaire étant, de plus, stable dans le temps, et à température ambiante, caractérisé par le fait qu'on met en présence dans le produit alimentaire, du xanthane et des pectines à haut degré de méthylation qui, par synergie, ont comme fonction d'assurer en combinaison cette texture spécifique et cette stabilité à température ambiante, on soumet ledit produit alimentaire à un traitement thermique assurant sa conservation.

L'invention concerne également le produit alimentaire obtenu par la mise en oeuvre du procédé.

Sur la figure est représentée une courbe rhéologique selon la méthode de BROOFIELD du produit obtenu selon l'invention. En abscisse, est représentée la tension de cisaillement, en ordonnée le gradiant des vitesses.

FIG.4

EP 0 244 294 A2

**Description**

## PROCEDE DE FABRICATION D'UN PRODUIT ALIMENTAIRE ET PRODUIT ALIMENTAIRE OBTENU PAR LE PROCEDE

L'invention concerne un procédé pour conférer à un produit alimentaire une texture spécifique intermédiaire entre celle d'un gel et celle d'un liquide, le produit alimentaire étant, de plus, stable dans le temps et à température ambiante. L'invention concerne également le produit alimentaire obtenu par la mise en oeuvre du procédé.

On connaît déjà les propriétés épaississantes et gélifiantes de gommes, notamment xanthane, et de pectines à bas degré de méthylation. On connaît aussi l'association de gomme et de pectines à bas degré de méthylation. Dans la demande de brevet japonaise no 58-225280, cette association est appliquée à un coulis de fruits et comprend, en outre, un sel de calcium en tant que composant essentiel supplémentaire de l'association. Le choix de la gomme et de la pectine à bas degré de méthylation est quelconque. La gomme est utilisée pour donner au produit une viscosité appropriée. L'effet de la pectine à bas degré de méthylation est renforcé par la présence de sel de calcium. Dans la demande de brevet japonaise no 58-194959, et dans le brevet américain no 4 129 663 l'association xanthane-pectines à bas degré de méthylation est appliquée à un assaisonnement, à de la mayonnaise, voire à une crème cosmétique. Tant le xanthane que la pectine à bas degré de méthylation sont employés pour leur fonction épaississant. Préférentiellement, ils sont associés, également, à un sel de calcium. Dans le brevet américain no 4 370 354 comme dans le brevet européen no 0042 710 l'association xanthane-pectines à bas degré de méthylation est appliquée à une suspension de fruits comportant également du sucre.

Ainsi, l'état de la technique révèle la possibilité de grouper le xanthane et une pectine à bas degré de méthylation avec pour objectif essentiel que chacun de ces corps permet d'éliminer certains inconvénients procurés par l'autre corps pris isolément, et, en cela, ils ne sont pas spécifiques. De plus, selon l'art antérieur, l'addition de xanthane et de pectine est prévue pour épaissir des produits à faible teneur en matière sèche. Même dans le cas des produits à base de fruits les produits ont une teneur en matière sèche inférieure à 55 %.

Par contre, l'état de la technique ne met pas en évidence la synergie pouvant exister entre le xanthane et la pectine.

Dans la préparation de certains produits alimentaires, notamment à base de fruits, on est confronté au problème particulier de l'obtention d'une texture très spécifique intermédiaire entre celle d'un gel et celle d'un liquide, combinée à la stabilité de ces produits alimentaires dans le temps et à température ambiante. Ces produits alimentaires sont par exemple des mousses de fruits qui, à température ambiante, devraient rester stables tout en étant susceptibles de s'écouler d'elles-mêmes. Ce problème spécifique n'a pu être résolu au moyen des systèmes gélifiants-épaississants connus tels que xanthane-caroube, carraghénanes-caroube, carraghénanes-pectine, gélatine-xanthane, xanthane-guar, alginates-pectine, etc ... En effet, ces systèmes ne permettent pas l'obtention, en combinaison, d'une texture fluide ayant notamment des caractéristiques de filant, d'homogénéité, d'absence de synérèse et d'une stabilité de la texture dans le temps et à température ambiante caractérisée notamment par des bulles régulières, une absence de décantation ou de regroupement des bulles.

L'invention a donc pour objectif essentiel de résoudre ce problème particulier de l'obtention de cette texture spécifique intermédiaire combinée à la stabilité dans le temps et à température ambiante.

Ce problème est résolu, selon l'invention, de façon surprenante, par le fait qu'on ajoute au produit alimentaire, lors de sa préparation, du xanthane et de la pectine qui, par synergie, ont comme fonction d'assurer, en combinaison, cette texture et cette stabilité.

L'invention sera mieux comprise grâce à la description suivante et la référence aux dessins sur lesquels :

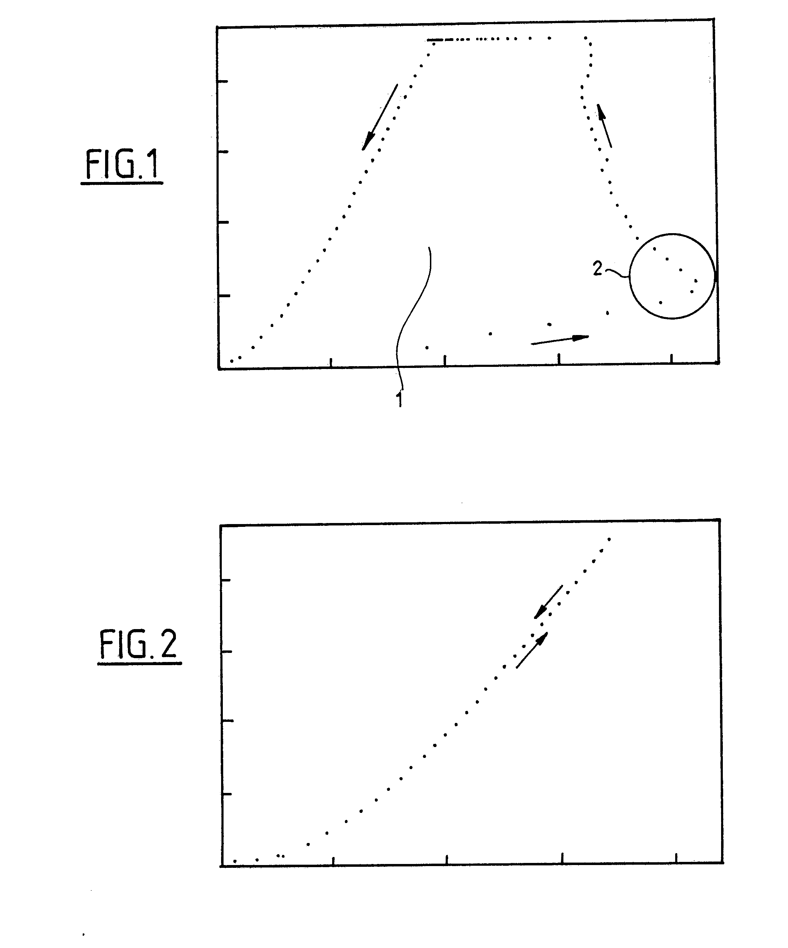

. La figure 1 représente la courbe rhéologique d'un gel.

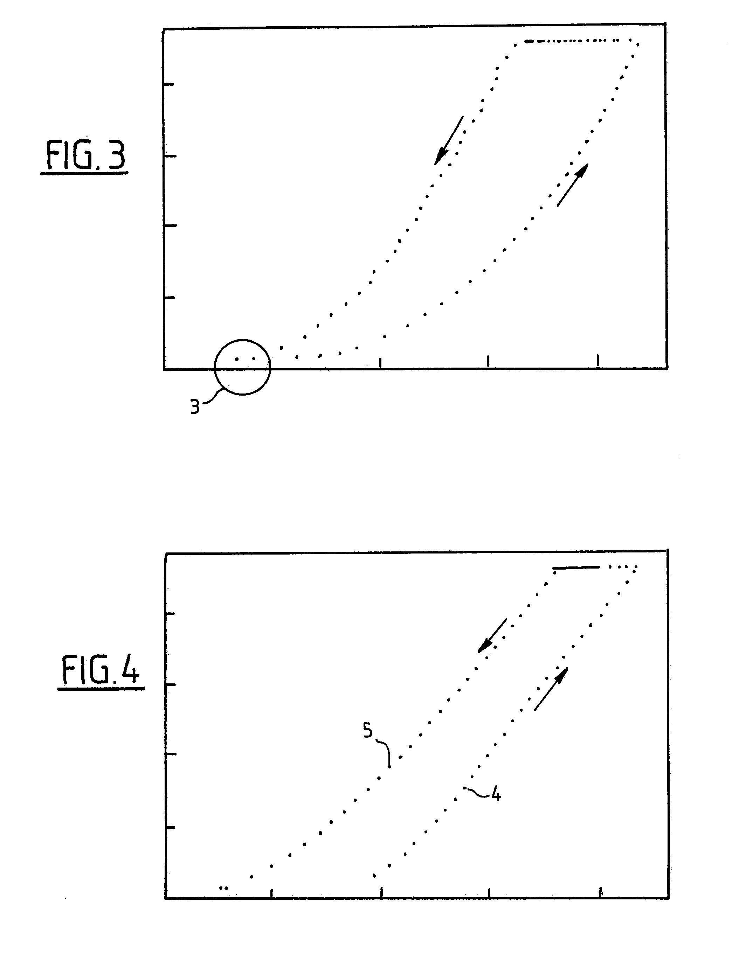

. La figure 2 représente la courbe rhéologique d'un liquide.

. La figure 3 représente la courbe rhéologique d'une sauce salade comportant un mélange-xanthane pectines à bas degré de méthylation.

. La figure 4 représente la courbe rhéologique d'un produit réalisé selon l'invention ayant la texture spécifique intermédiaire entre celle d'un gel et celle d'un liquide .

Le procédé vise à conférer à un produit alimentaire une texture spécifique intermédiaire entre celle d'un gel et celle d'un liquide, le produit alimentaire étant, de plus, stable dans le temps et à température ambiante.

La texture spécifique recherchée est définie plus précisément par sa courbe rhéologique et par comparaison aux courbes analogues d'autres types de produits. Sur ces courbes sont représentés en abscisse la tension de cisaillement et en ordonnée le gradiant des vitesses.

Ces courbes sont d'une manière classique obtenues selon une méthode analogue à la méthode de BROOFIELD.

Sur la figure 1 est représentée la courbe représentant un gel. d'une part, elle délimite une surface 1 importante présente un pic 2 qui caractérisent et la cassure du gel.

Sur la figure 2 est représenté un liquide caractéristique en ce que les courbes 6 d'aller et de retour se superposent.

Sur la figure 3 est représenté un produit de l'art antérieur du type sauce salade comportant un mélange de xanthane et de pectine à bas taux de méthylation. La courbe montante en 3 fait apparaître que avant tout traitement le produit au repos est fluide.

Sur la figure 4 est représentée la courbe d'un produit selon l'invention. Le parallélisme des courbes d'aller 4 et de retour 5 (courbe de destructuration et courbe de restructuration) traduit la conservation des propriétés relatives. Après un repos assez long le produit retrouve ses propriétés initiales. La courbe délimite ainsi une surface thixotropique.

Selon l'invention, on met en présence dans le produit alimentaire, lors de sa préparation du xanthane et de la pectine à haut degré de méthylation qui par synergie ont comme fonction d'assurer en combinaison cette texture spécifique et cette stabilité dans le temps à température ambiante et on soumet ledit produit alimentaire à un traitement thermique assurant sa conservation.

Le produit alimentaire considéré est d'origine végétale ou animale. Ce produit alimentaire peut comporter originellement, de la pectine comme c'est le cas pour les pommes.

Ainsi, le produit alimentaire utilisé peut être à base de fruits et/ou de légumes et/ou de lait et dérivés et/ou de viande. Le produit alimentaire peut être, par exemple, une purée, une compote, un coulis, un jus, un broyat plus ou moins grossier, un isolat de pommes, fraises, framboises, légumineuses, cassis, poires, myrtilles, citrons, oranges, ananas, cerises, pêches, goyaves, fruits de la passion, agrumes, fruits tropicaux, et autres fruits, haricots, pois, lentilles, céréales, épinards, pommes de terre, tomates, champignons, carottes, céleris, choux, betteraves, radis, blettes, fenouils, salsifis, et autres légumes. Le produit alimentaire peut être aussi du fromage, du beurre, de la poudre de lait, des isolats et des rétentats protéiques.

Ainsi qu'il a été mentionné précédemment, le produit alimentaire, peut comporter originellement de la pectine naturelle (cas de certains fruits et légumes). Toutefois, celle-ci peut s'avérer être insuffisante pour l'objectif visé. Pour cette raison, selon l'invention, il est prévu d'ajouter le complément de pectine nécessaire.

Une pectine est dite à haut degré de méthylation lorsque son degré de méthylation est supérieur à 50 %.

La pectine utilisée est une pectine à bas degré de méthylation et/ou une pectine à haut degré de méthylation, le degré de méthylation étant compris entre 20 % et 75 % environ. La pectine ajoutée est à haut degré de méthylation. La pectine utilisée est la pectine naturelle de la base végétale notamment du produit alimentaire (cas de la pomme, ou d'autres matières premières végétales) ou de la pectine connue en soi, industrielle, d'extraction, purification. Les pectines naturelles de fruits frais et sains sont en majorité à haut degré de méthylation.

Le xanthane est préférentiellement issu de la culture de Xanthomonas campestris.

Selon l'invention, on ajoute le xanthane avant tout début de gélification de la pectine ajoutée. L'ajout de xanthane et de pectine peut faire l'objet de nombreuses variantes selon la nature du produit alimentaire concerné et son procédé général de préparation. Toutefois, d'une façon générale, il convient d'éviter des valeurs du produit temps x températures trop élevées, d'éviter la formation de grumeaux, de travailler sur une matière première homogène (du fait qu'elle peut être la source de pectines, d'agents complexants, de solvants ou de molécules incompatibles).

Le produit alimentaire est ensuite soumis à un traitement thermique ce qui permet d'assurer sa conservation et ne modifie pas sa consistance. Ce traitement peut être une stérilisation (120°C pendant 10mn). Dans certains cas, une pasteurisation peut être suffisante.

Le ratio en poids de xanthane et de pectine ajoutée est compris entre 1:9 et 9:1 et préférentiellement entre 1:4 et 4:1. Pour l'obtention d'un produit alimentaire ayant en combinaison une excellente stabilité, un filant maximum et une fluidité maximum, ce ratio est égal ou voisin de 1:1.

La proportion en poids de la combinaison xanthane-pectine dans le produit alimentaire final est comprise entre 0.1 % et 2 % et préférentiellement entre 0.1 % et 1.5 %.

Le procédé peut comporter également l'ajout d'eau et/ou de composés glucidiques solubles (saccharose, sucre inverti, miel, sirop de glucose, etc...), et/ou d'agents de sapidité (sel, aromates, épices, acides alimentaires, etc...), et/ou d'arômes ou colorants commerciaux, et/ou d'un ou plusieurs additifs de texturation, de foisonnement, d'émulsification ou autres.

Le procédé peut comporter également une ou plusieurs étapes ultérieures d'homogénéisation, foisonnement, congélation, hachage, cuisson, stérilisation, pasteurisation, concentration, dilution, etc...

L'invention concerne également un produit alimentaire obtenu par le procédé qui vient d'être décrit, ce produit alimentaire ayant un taux de matières sèches compris entre 7 et 70 % environ et un pH inférieur ou égal à 6,5 environ, la valeur du pH n'étant pas déterminante.

Les produits alimentaires ainsi obtenus peuvent avoir des textures variables selon leur nature, leur destination et les quantités relatives de xanthane et de pectine ajoutée. Ces textures qui ont comme caractéristique d'être intermédiaire entre celle d'un gel et celle d'un liquide peuvent faire l'objet de différences de degré allant du quasiment liquide (cas de coulis de fruits, de yaourt à boire) au tartinable (cas de miel, de fromage frais ou fondu, etc...) en passant par le cuillerable non gélifié (mousse fluide, yaourt brassé...).

Ces produits alimentaires peuvent résister à des conditions sévères telles que l'ébullition (entre 90 et 120°),un pH acide inférieur ou égal à 4, un malaxage, sans perdre pour autant leur caractère visqueux ou filant, et sans induire de synérèse si un gel a été fracturé. Cette caractéristique résulte de la stabilité recherchée et obtenue.

Les exemples ci-dessous permettent d'illustrer quelques formulations possibles mais non limitatives de produits alimentaires obtenus par la mise en oeuvre du procédé.

Exemple 1 : Pâte à tartiner aux fruits

- Concentré de fruits + eau à 8 % de matières sèches ou pulpes de fruits à 6 à 8 % de matières sèches...... 35 %
- Saccharose.............................. 15 %
- Sirop de glucose 60 DE, 83,5 % MS........ 50 %
- Acide citrique Sol° 50 % ........ env. 0.3 %
- Xanthane................................. 0.4 %
- Pectine à bas degré de méthylation ....... 0.4 %
- Pectine à haut degré de méthylation ...... 0.1 %
Extrait sec final : 60 %
pH final : 3.2

Le produit est une pâte aux fruits pouvant être appliquée sur une tartine.

Exemple 2 : Mousse de pomme

- Pommes entières à 12 % de matières sèches.... 80 %
- Saccharose.............................. 19.6 %
- Xanthane................................. 0.2 %
- Protéines de soja hydrolysées............. 0.2 %
Extrait sec final : 30 %
pH : 3.5

Le produit alimentaire obtenu à base de pommes présente l'aspect d'une mousse fluide et capable de s'écouler.

Exemple 3 : Mousse de carotte

- Carottes à 10 % de matières sèches.. 98 %
- Sel marin................................ 0.5 %
- Epices................................... 0.7 %
- Pectine.................................. 0.45%
- Xanthane................................. 0.4 %
- Protéines de soja hydrolisées............ 0.2 %
Extrait sec final : 13 %
pH final : 4

Le produit alimentaire obtenu est une mousse de légumes (carottes).

Exemple 4 : Coulis de fraise

- Purée de fraises à 6 % de matières sèches.. 55 %
- Saccharose.............................. 5.0 %
- Sirop de glucose 60 DE, 85,5 % MS ...... 32 %
- Pectine à haut degré de méthylation ..... 0.25%
- Xanthane................................. 0.3 %
- Acide citrique Sol° 43° Brix ..env. 0.4 %
Extrait sec final : 40 %
pH final : 3

Le produit obtenu est un coulis de fruits ayant une texture plus liquide que la pâte à tartiner de l'exemple 1.

Exemple 5 : Fromage-mousse

- Lait entier...................... 60 %
- Rétentat en poudre................... 17.2 %
- Yaourt sucré à 9 %.................... 3.0 %
- Crème stérilisée UHT 35 % MG......... 15.1 %
- Eau................................... 2.7 %
- Sel marin............................. 1.0 %
- Mono et di-glycérides d'acides gras... 0.15%
- Protéines de soja hydrolysées......... 0.35%
- Xanthane.............................. 0.11%
- Pectine 50 % méthylée................. 0.45%

Les exemples précédents mettent en évidence également le fait que plus le produit alimentaire comporte originellement de pectine (cas des pommes de l'exemple 2), moins il est nécessaire de prévoir une ajonction supplémentaire de pectines.

On note, enfin, que s'agissant de la pectine, l'emploi de pectines à bas degré de méthylation (moins de 50 % de radicaux COO-CH$_3$ - cas de pectines industrielle) implique pour la fonction gélification la présenc d'un cation divalent Ca++ outre les conditions favorables en ce qui concerne l'extrait sec et le pH. Par contre, en ce qui concerne la pectine à haut degré de méthylation (pectines naturelles) la gélification n'implique pas la présence d'un tel cation divalent.

## Revendications

1. Procédé pour conférer à un produit alimentaire une texture spécifique intermédiaire entre celle d'un gel et celle d'un liquide, le produit alimentaire étant, de plus, stable dans le temps, et à température ambiante, caractérisé par le fait qu'on met en présence dans le produit alimentaire, du xanthane et des pectines à haut degré de méthylation qui, par synergie, ont comme fonction d'assurer en combinaison cette texture spécifique et cette stabilité à température ambiante, on soumet ledit produit alimentaire à un traitement thermique assurant sa conservation.

2. Procédé selon la revendication 1, caractérisé par le fait que le produit alimentaire est d'origine végétale ou animale.

3. Procédé selon l'une quelconque des revendications 1 et 2, caractérisé par le fait que le produit alimentaire comporte originellement de la pectine.

4. Procédé selon l'une quelconque des revendications 1 à 3, caractérisé par le fait que le produit alimentaire utilisé est à base de fruits et/ou de légumes et/ou de lait et dérivés et/ou de viande.

5. Procédé selon l'une quelconque des revendications 1 à 4, caractérisé par le fait que le xanthane est issu de la culture de Xanthomonas campestris.

6. Procédé selon l'une quelconque des revendications 1 à 5, caractérisé par le fait qu'on ajoute le xanthane avant tout début de gélification de pectine.

7. Procédé selon l'une quelconque des revendications 1 à 6, caractérisé par le fait que le ratio en poids de xanthane et de pectine est compris entre 1:9 et 9:1 et préférentiellement entre 1:4 et 4:1.

8. Procédé selon l'une quelconque des revendications 1 à 7, caractérisé par le fait que le ratio en poids de xanthane et de pectine ajoutée est égal ou voisin de 1:1 et ceci pour l'obtention d'un produit alimentaire ayant en combinaison une excellente stabilité, un filant maximum et une fluidité maximum.

9. Procédé selon l'une quelconque des revendications 1 à 8, caractérisé par le fait qu'il comporte également l'ajout d'eau ; et/ou de composés glucidiques solubles et/ou d'agents de sapidité et/ou d'arômes ou colorants et/ou d'au moins un additif de texturation, foisonnement, émulsification.

10. Procédé selon l'une quelconque des revendications 1 à 9, caractérisé par le fait qu'il comporte une étape ultérieure d'homogénéisation et/ou foisonnement et/ou congélation et/ou hachage et/ou cuisson et/ou concentration et/ou dilution.

11. Procédé selon l'une quelconque des revendications 1 à 10, caractérisé par le fait que la proportion en poids de la combinaison de xanthane-pectine dans le produit alimentaire est compris entre 0,1 % et 2 % et préférentiellement entre 0,1 % et 1,5 %.

12. Produit alimentaire obtenu par le procédé selon l'une quelconque des revendications 1 à 11, caractérisé par le fait qu'il a un taux de matières sèches compris entre 7 et 70 % et un pH inférieur à 6,5 environ.

13. Produit selon la revendication 12, caractérisé en ce que le taux de matière sèche est supérieur à 60 %.

FIG.1

FIG.2

0244294

FIG.3

FIG.4